# DEMANDE DE BREVET EUROPEEN

(11) **EP 1 820 694 A2**
(43) Date de publication de la demande: **22.08.2007**
(21) Numéro de dépôt: 07290118.4
(22) Date de dépôt: 30.01.2007
(51) Int. Cl.: B60Q 1/12, B60Q 1/076

(54) **Agencement perfectionné pour le pivotement d'un module elliptique de système d'éclairage pour véhicule automobile**

(30) Priorité: 17.02.2006 FR 0601434
(71) Demandeur: VALEO VISION, 93012 Bobigny Cédex (FR)
(72) Inventeur: Letoumelin, Rèmy, 77700 Chessy (FR)

(57) **Abrégé**

L'invention concerne un agencement (10) pour le pivotement d'un module elliptique (12) d'éclairage avant de véhicule automobile, du type qui comporte un élément structurel (13) fixe qui est destiné à supporter le module elliptique (12) d'éclairage, le module elliptique (12) d'éclairage qui est monté pivotant autour d'un axe (A) vertical et qui comporte un réflecteur (36) d'axe (B) de révolution, le réflecteur (36) comportant une portion inférieure tronquée formant logement (52), un élément d'entraînement (14) en pivotement du module elliptique (12) comportant un secteur denté (46), et un mécanisme de transmission (16) qui comporte une roue dentée engrenant dans le secteur denté (46) de l'élément d'entraînement (14) pour entraîner le module elliptique (12) en pivotement autour de l'axe (A) vertical de pivotement, caractérisé en ce que l'élément d'entraînement (14) du module elliptique (12) est au moins en partie agencé dans le logement (52) formé par la portion tronquée du réflecteur (36).

## Description

L'invention concerne un agencement pour le pivotement d'un module elliptique de système d'éclairage pour véhicule automobile.

L'invention concerne plus particulièrement un agencement pour le pivotement d'un module elliptique de système d'éclairage pour véhicule automobile, produisant au moins un faisceau d'éclairage orientable dirigé globalement longitudinalement vers l'avant, du type qui comporte :
- un élément structurel fixe qui est destiné à supporter le module elliptique par rapport au véhicule automobile ;
- le module elliptique qui est monté pivotant autour d'un axe vertical par rapport à l'élément structurel fixe, et qui comporte un réflecteur dont l'axe est globalement longitudinal et de section décroissante vers l'arrière, le réflecteur comportant une portion inférieure tronquée formant logement ;
- un élément d'entraînement en pivotement du module elliptique comportant un secteur denté qui est en forme d'arc de cercle et qui est centré sur l'axe vertical de pivotement du module elliptique; et
- un mécanisme de transmission qui comporte une roue dentée entraînée en rotation par un actionneur fixe par rapport à l'élément structurel, la roue dentée engrenant dans le secteur denté de l'élément d'entraînement pour entraîner le module elliptique en pivotement autour de l'axe vertical de pivotement.

Le domaine de l'invention est, d'une façon générale, celui des projecteurs pour véhicules automobiles remplissant la fonction dite "DBL" (Dynamic Bending Light en anglais), permettant de modifier l'orientation d'un faisceau lumineux produit par une source lumineuse, de telle sorte que lorsque le véhicule aborde un virage, la route est éclairée de façon optimale.

Dans la description et les revendications, on utilisera à titre arbitraire et non limitatif les directions "longitudinale", "transversale" ou "verticale" pour désigner respectivement des éléments selon les définitions données dans la description et par rapport au trièdre (L, V, T) représenté sur les figures.

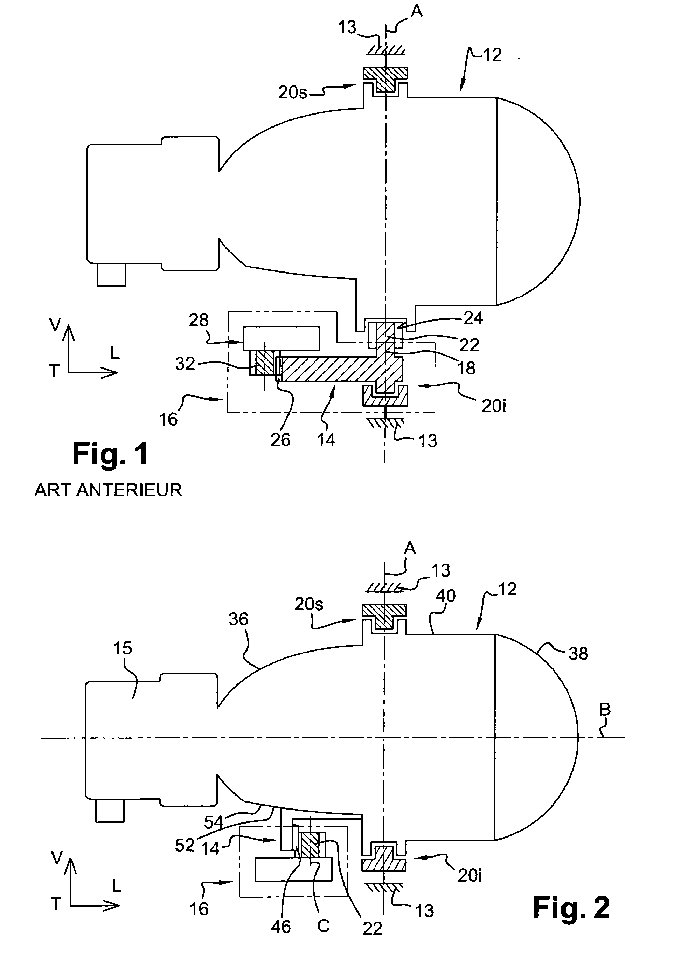

On connaît un type d'agencement, représenté à la figure 1, qui comporte un module elliptique 12 remplissant la fonction "DBL".

Le module elliptique 12 est monté pivotant autour d'un axe A vertical de pivotement par rapport à un élément structurel 13 fixe, et il est guidé en rotation au moyen d'un palier supérieur 20s et d'un palier inférieur 20i qui sont alignés verticalement sur l'axe A vertical de pivotement.

L'agencement est équipé d'un mécanisme 16 de transmission, qui comporte un ensemble moto-réducteur 28 fixe, entraînant en rotation un pignon 32.

Le pignon 32 engrène dans un secteur denté 26 convexe qui est centré sur l'axe A vertical de pivotement et qui est fixé à un tronçon médian d'un arbre 18 d'axe A.

L'arbre 18 comporte une première extrémité inférieure qui est montée pivotante dans le palier inférieur 20i, et comporte une seconde extrémité supérieure, en forme de roue cannelée 22, qui est emboîtée dans un logement 24 du module elliptique 12 pour entraîner le module elliptique 12 en pivotement.

Un inconvénient de cette conception est que, pour des raisons d'architecture, le mécanisme 16 de transmission est agencé de manière qu'il augmente l'encombrement du module elliptique 12, notamment l'encombrement vertical.

Pour remédier à cet inconvénient, l'invention propose un agencement du type décrit précédemment, caractérisé en ce que l'élément d'entraînement du module elliptique est au moins en partie agencé dans le logement formé par la portion tronquée du module elliptique.

Selon d'autres caractéristiques de l'invention :
- l'élément d'entraînement du module elliptique est réalisé venu de matière avec le module elliptique,
- l'élément d'entraînement comporte une face intérieure concave en forme d'arc de cercle dans laquelle est agencé le secteur denté,
- le mécanisme de transmission comporte des moyens de rattrapage de jeu entre l'élément d'entraînement et la roue dentée du mécanisme de transmission,
- le mécanisme de transmission comporte un réducteur.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en coupe longitudinale, représentant un agencement pour le pivotement d'un module elliptique selon l'art antérieur ;
- la figure 2 est une représentation schématique similaire à celle de la figure 1, représentant l'agencement pour le pivotement d'un module elliptique selon l'invention ;
- la figure 3 est une vue éclatée en perspective de l'agencement selon l'invention ;
- la figure 4 est une vue en coupe longitudinale de l'agencement selon l'invention.

De plus, les éléments identiques, similaires ou analogues seront désignés par les mêmes chiffres de référence.

On a représenté schématiquement aux figures 2, 3 et 4, un agencement 10 pour le pivotement d'un module elliptique 12 selon l'invention.

Le module elliptique 12 est ici utilisé dans un projecteur d'éclairage avant pour véhicule automobile, et comporte un axe B optique longitudinal.

Un module du type elliptique est décrit en détails dans le document EP-A-0628765.

A titre indicatif, on entend par module elliptique 12 un module 12 comportant une source lumineuse 34 agencée dans un premier foyer, un réflecteur 36 capable de concentrer la lumière issue du premier foyer vers un second foyer de concentration qui est situé en avant de la source lumineuse 34, et une lentille 38 placée en avant du second foyer et centrée sur l'axe B optique, permettant de réorienter les rayons de la source lumineuse 34, afin de produire un faisceau d'éclairage.

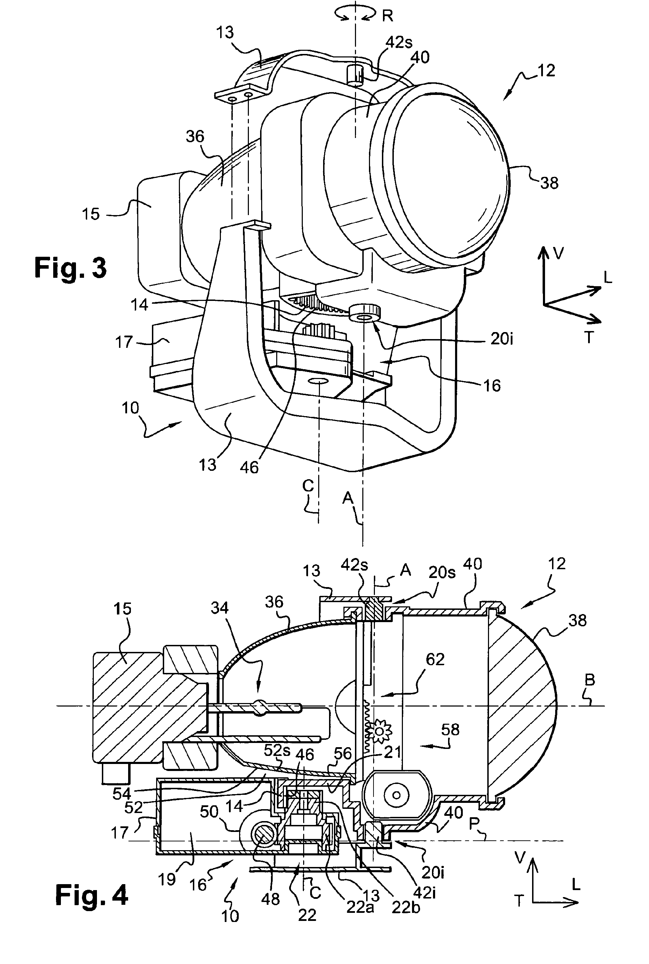

D'arrière en avant, selon l'axe B optique de la figure 4, le module elliptique 12 comporte ici un module haute tension 15 qui alimente en énergie la source lumineuse 34 et qui est raccordé au réflecteur 36, un manchon 40 qui est fixé dans une extrémité avant du réflecteur 36, et une lentille 38 qui est fixée par le manchon 40.

Le réflecteur 36 est de forme d'un demi ellipsoïde d'axe B de révolution, et de section décroissante vers l'arrière.

La forme de demi ellipsoïde du réflecteur 36 comporte une portion tronquée, dans une portion inférieure 54 du réflecteur 36, formant logement 52 extérieur.

Ainsi, comme on peut le voir à la figure 4, la portion tronquée du réflecteur 36 forme un méplat 56 globalement horizontal dans le réflecteur 36, le méplat 56 formant la face supérieure 52s du logement 52.

Le module elliptique 12 est monté pivotant selon un axe A vertical par rapport à un élément structurel 13 fixe, entre une première position angulaire extrême dans laquelle le faisceau produit par le module elliptique 12 est orienté sensiblement vers la gauche du véhicule, et une seconde position angulaire extrême dans laquelle le faisceau produit par le module elliptique 12 est orienté sensiblement vers la droite du véhicule, comme l'illustre la flèche R à la figure 3.

Par élément structurel 13, on désigne une pièce, ici en forme de cadre en deux parties, qui supporte le module elliptique 12 et qui est destinée à être agencée à l'avant du véhicule de manière fixe par rapport à la structure du véhicule.

Le module elliptique 12 comporte deux orifices circulaires opposés d'axe A, formant palier supérieur 20s et palier inférieur 20i, lesquels sont ici agencés globalement dans un tronçon arrière du manchon 40.

L'élément structurel 13 comporte un doigt inférieur 42i et un doigt supérieur 42s cylindriques qui sont coaxiaux selon l'axe A et qui sont reçus respectivement dans le palier inférieur 20i et dans le palier supérieur 20s du module elliptique 12, pour réaliser le guidage en pivotement du module elliptique 12 autour de l'axe A.

A titre non limitatif, le guidage en pivotement du module elliptique 12 peut être réalisé par tout autre moyen de guidage en pivotement connu de l'état de la technique.

L'agencement 10 comporte un mécanisme 16 de transmission, qui est logé dans un boîtier 17 fixe par rapport à l'élément structurel 13.

Le boîtier 17 est agencé en arrière du palier inférieur 20i, en partie sous le réflecteur 36 et sous le bloc d'alimentation 15.

Le mécanisme 16 de transmission, illustré en détails à la figure 4, comporte un actionneur fixe par rapport à l'élément structurel 13, ici un moteur électrique 50, qui entraîne en rotation une tige motrice transversale supportant, dans l'exemple illustré, une vis sans fin 48.

La vis sans fin 48 entraîne en rotation, autour d'un axe vertical, un pignon 22 qui comporte un premier étage 22a et un second étage 22b.

Le premier étage 22a du pignon 22 correspond à une première roue dentée qui engrène dans la vis sans fin 48, et le second étage 22b correspond à une seconde roue dentée qui engrène dans un élément d'entraînement 14.

On entend par élément d'entraînement 14, l'élément intermédiaire qui est entraîné en pivotement par le pignon 22 et qui entraîne en pivotement le module elliptique 12.

Le premier étage 22a et le second étage 22b du pignon 22 ont ici une fonction de réducteur. Les deux étages 22a, 22b comportent un diamètre différent, ce qui permet de respecter un rapport de réduction entre la vitesse de rotation imposée par le moteur 50 et une vitesse angulaire que doit respecter le module elliptique 12 lorsqu'il évolue en pivotement.

Par ailleurs, le boîtier 17 comporte une portion 19 destinée à recevoir des éléments, non représentés sur les figures, tels qu'une carte électronique pour gérer le fonctionnement du moteur 50, et un ensemble de connecteurs électriques pour l'alimentation de la carte électronique et du moteur 50.

Conformément à l'invention, l'élément d'entraînement 14 du module elliptique 12 est au moins en partie agencé dans le logement 52 formé par la portion tronquée du réflecteur 36.

Ainsi, l'élément d'entraînement 14 comporte une plaque 21 horizontale qui s'étend sous le réflecteur 36, dans le logement 52, et qui est raccordée à un élément du module elliptique 12, ici le manchon 40. Avantageusement, l'élément d'entraînement 14 est réalisé venu de matière avec le manchon 40.

L'élément d'entraînement 14 comporte un secteur denté 46 arqué qui est centré sur l'axe A vertical de pivotement et qui s'étend verticalement vers le bas, depuis l'extrémité arrière de la plaque 21 horizontale. Le secteur denté 46 comporte une denture intérieure, dans sa face concave, qui engrène dans le second étage 22b du pignon 22 du mécanisme de transmission 16.

Ainsi, le fait d'agencer le secteur denté 46 de l'élément d'entraînement 14 dans le logement 52, permet d'utiliser un espace qui était inoccupé selon l'agencement de l'art antérieur illustré à la figure 1, ce qui a pour conséquence d'améliorer la compacité du module elliptique 12.

A titre non limitatif, le secteur denté 46 peut comporter une denture extérieure, dans sa face convexe.

Selon une variante de l'invention, l'élément d'entraînement 14 peut être fixé dans la portion inférieure 54 du réflecteur 36, par exemple.

L'angle du secteur denté 46 denté est proportionnel à la plage angulaire que doit couvrir le module elliptique 12, ici environ quatre vingt dix degrés.

A titre optionnel, le module elliptique 12 comporte des moyens 58 pour le changement de l'état du faisceau lumineux. A cet effet, le module elliptique 12 comporte un cache amovible 62 pouvant passer sur commande d'une première position dans laquelle il occulte une partie du faisceau lumineux, la portée du module elliptique 12 étant ainsi limitée à celle des feux de croisement, à une deuxième position dans laquelle il n'occulte pas le faisceau lumineux, la portée du module elliptique 12 correspondant alors à celle des feux de route, comme décrit dans le brevet EP-A-1 197 387.

Les moyens 58 pour le changement de l'état du faisceau lumineux augmentent la hauteur verticale du logement 52, notamment par la présence de l'actionneur 60 qui permet d'entraîner le cache amovible 62, et qui est ici globalement agencé au dessus du palier inférieur 20i.

Avantageusement, le mécanisme 14 d'entraînement est équipé de moyens de rattrapage de jeu (non représentés) entre le pignon 22 et le secteur denté 46 de l'élément d'entraînement 14, les moyens de rattrapage de jeu étant connus de l'état de la technique.

A cet effet, le second étage 22b du pignon 22 qui engrène dans le secteur denté 46 est scindé horizontalement en une première et une seconde partie, qui engrènent chacune dans le secteur denté 46.

La première partie entraîne en rotation la seconde partie du pignon 22, et sont désindexées angulairement d'une demi dent environ l'une par rapport à l'autre, au moyen d'un élément élastique.

Ainsi, les dents désindexées du pignon 22 engrènent dans le secteur denté 46 en appuyant contre les flancs des dents associées du secteur denté 46, pour éviter les jeux dans les deux sens.

## Revendications

1. Agencement (10) pour le pivotement d'un module elliptique (12) d'éclairage avant de véhicule automobile, produisant au moins un faisceau d'éclairage orientable dirigé globalement longitudinalement vers l'avant, du type qui comporte :
- un élément structurel (13) fixe qui est destiné à supporter le module elliptique (12) d'éclairage par rapport au véhicule automobile ;
- le module elliptique (12) d'éclairage qui est monté pivotant autour d'un axe (A) vertical par rapport à l'élément structurel (13) fixe, et qui comporte un réflecteur (36) d'axe (B) de révolution globalement longitudinal et de section décroissante vers l'arrière, le réflecteur (36) comportant une portion inférieure (54) tronquée formant logement (52) ;
- un élément d'entraînement (14) en pivotement du module elliptique (12) comportant un secteur denté (46) qui est en forme d'arc de cercle et qui est centré sur l'axe (A) vertical de pivotement du module elliptique (12) ; et
- un mécanisme de transmission (16) qui comporte une roue dentée (22) entraînée en rotation par un actionneur (56) fixe par rapport à l'élément structurel (13), la roue dentée (22) engrenant dans le secteur denté (46) de l'élément d'entraînement (14) pour entraîner le module elliptique (12) en pivotement autour de l'axe (A) vertical de pivotement,
**caractérisé en ce que** l'élément d'entraînement (14) du module elliptique (12) est au moins en partie agencé dans le logement (52) formé par la portion tronquée du réflecteur (36).

2. Agencement (10), selon l'une quelconque des revendications, **caractérisé en ce que** l'élément d'entraînement (14) du module elliptique (12) est réalisé venu de matière avec le module elliptique (12).

3. Agencement (10), selon l'une quelconque des revendications précédentes, **caractérisé en ce que** l'élément d'entraînement (14) comporte une face intérieure concave en forme d'arc de cercle dans laquelle est agencé le secteur denté (46).

4. Agencement (10), selon l'une quelconque des revendications précédentes, **caractérisé en ce que** le mécanisme de transmission (16) comporte des moyens de rattrapage de jeu entre l'élément d'entraînement (14) et la roue dentée (22) du mécanisme de transmission (16).

5. Agencement (10), selon l'une quelconque des revendications précédentes, **caractérisé en ce que** le mécanisme de transmission (16) comporte un réducteur.
